# EUROPEAN PATENT SPECIFICATION

(11) **EP 3 128 111 B1**
(45) Date of publication and mention of the grant of the patent: **09.10.2019**
(21) Application number: 16182036.0
(22) Date of filing: 29.07.2016
(51) Int. Cl.: E06B 1/34, B32B 21/04, E06B 3/10, E06B 3/30

(54) **DOOR OR WINDOW FRAME WITH HIGH RESISTANCE TO ATMOSPHERIC AGENTS**
TÜR- ODER FENSTERRAHMEN MIT HOHER BESTÄNDIGKEIT GEGENÜBER WITTERUNGSEINFLÜSSEN
CADRE DE PORTE OU DE FENÊTRE À HAUTE RÉSISTANCE AUX AGENTS ATMOSPHÉRIQUES

(30) Priority: 06.08.2015 IT UB20152923
(43) Date of publication of application: 08.02.2017
(73) Proprietor: SCIUKER FRAMES S.p.A., 83020 Contrada (AV) (IT)
(72) Inventor: Cipriano, Rocco, 83100 Avellino (IT)
(74) Representative: Bellomia, Paolo

(56) References cited:
- WO-A1-2009/138536
- BE-A- 560 561
- DE-A1- 4 019 297
- US-A- 3 815 285
- US-A1- 2004 206 025

## Description

The present invention relates to a door or window frame with high resistance to atmospheric agents. More specifically, the invention relates to a door or window frame with a wooden structure that is capable of withstanding bad weather and salinity.

As is known, the supporting structure of door and window frames usually is made of various different materials, such as for example: lamellar wood, solid wood, box-type profiles in reinforced ABS, reinforced polyamide in fiberglass, PVC, thermal break aluminum, fiberglass reinforced plastic, technopolymer etc.

Some of these structures, in particular wooden ones, in order to avoid maintenance and consequently the action of atmospheric agents, are covered, on the external part, with profiles and/or plates of aluminum or various materials that are resistant to atmospheric agents or with structural glass panes.

In such case, such types of door and window frames are defined as door and window frames of wood mixed with other materials.

Currently, doors or windows of mixed type can be grouped in the following categories:
- Door and window frames in aluminum/wood, where the supporting structure is made of aluminum and a slender part concerning wood is conveniently hooked to the aluminum part.
- Door and window frames in thermal break aluminum/wood, where the aluminum part is provided with a thermal break; substantially, it is the combination of two aluminum frames (the internal part and the external part) with the insulating material, in general polyamide, interposed in order to interrupt the thermal flows owing to high conductivity. On such supporting structure, a slender part in wood is added internally. In such case, since the aluminum is thermal break aluminum, acceptable performance levels can be achieved in terms of heat transmission rate, but at a very high cost.

- Door and window frames in glass/aluminum. These are really fully-fledged door and window frames made of wood/aluminum, in that they are door and window frames of wood in its various forms and wooden types with 90° and/or 45° corner coupling, where on the external part a small quantity of aluminum is applied, separately, on pre-assembled wooden frames, by way of various systems for protecting the wood from atmospheric agents.
- Door and window frames of various mixed materials: wood/PVC; PVC/aluminum; aluminum/PVC/aluminum; wood/copper; wood/brass etc. These are all made by coupling two or more different materials, but the complexity of construction makes them more expensive than other types of door and window frames.

Usually, conventional door or window frame systems provide a door or window frame in two parts in different materials coupled together (the structural supporting part and the outer protection part). The two parts, the structural part made of wood, aluminum or PVC and the outer, protective part in loose pieces are pre-assembled to form two separate elements which are subsequently coupled together.

Furthermore, when the supporting structure of the door or window frame is made of wood (solid or lamellar), the production cycle to produce a door or window frame of wood/aluminum is more complex than when supporting structures of aluminum are used, and even more so than a product made of PVC.

The cost of door and window frames in aluminum is usually higher than the other types of door or window frame.

US-A-3 815 285 discloses a window construction comprising a wooden sash and a wooden frame which has its exterior portion, normally exposed to the weather, covered by a protective metal cladding. The metal cladding may have a desired colour provided by a coating of high temperature baked acrylic polymer, and the cladding is mounted on the wooden sash/frame by snap fitting the cladding over the sash/frame so that no additional fasteners are employed.

US 2004/0206025 A1 discloses a door or window frame according to the preamble of claim 1.

The aim of the present invention is to provide a door or window frame with high resistance to atmospheric agents, which has a wooden supporting structure.

Within this aim, an object of the present invention is to provide a door or window frame with high resistance to atmospheric agents, in which the wooden supporting structure is adequately protected against the above mentioned atmospheric agents and against saline mists.

Another object of the present invention is to provide a door or window frame that is highly reliable, easily and practically implemented and low cost.

In accordance with the invention, there is provided a door or window frame as defined in the appended claims.

Further characteristics and advantages of the invention will become better apparent from the following description illustrated by way of non-limiting example in the accompanying drawings, in which:

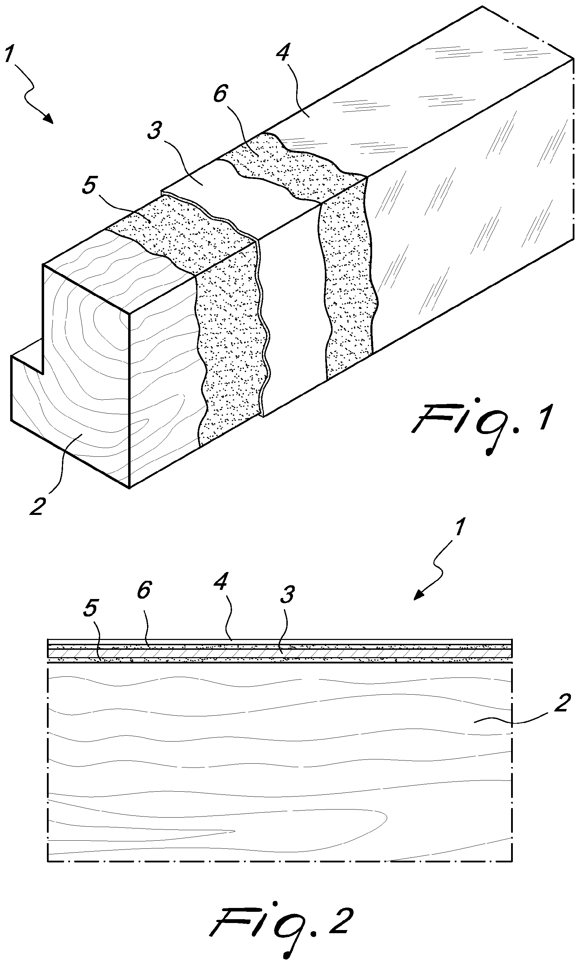

Figure 1 is a cutaway perspective view of a first embodiment of a door or window frame not falling under the scope of the present invention;
Figure 2 is a partially cross-sectional front elevation view of the door or window frame of Figure 1;

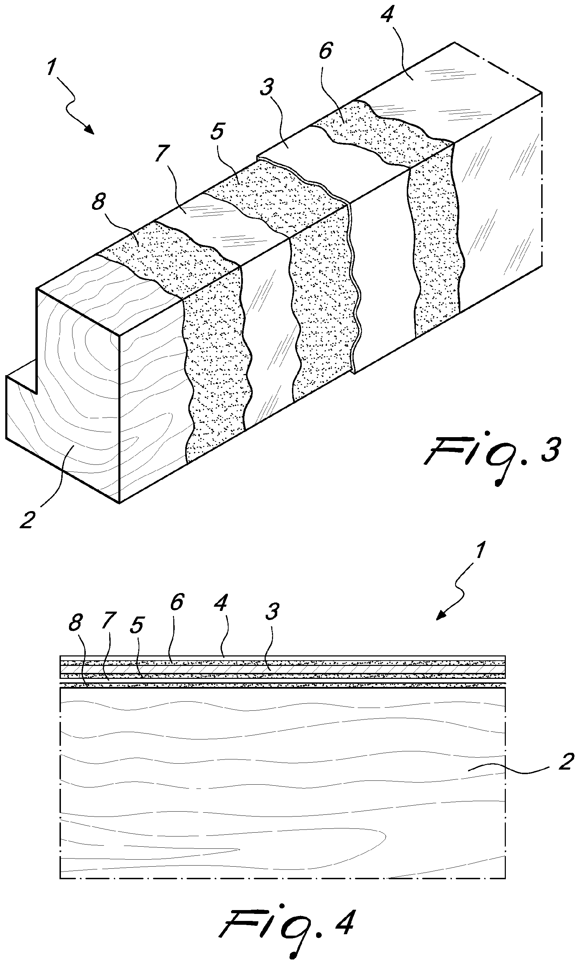

Figure 3 is a cutaway perspective view of a second embodiment of the door or window frame according to the invention;
Figure 4 is a partially cross-sectional front elevation view of the door or window frame of Figure 3.

With reference to the figures, the door or window frame, generally designated by the reference numeral 1, comprises a wooden supporting structure, 2, which is adapted to be externally protected by at least one lamina 3 of metal, for example aluminum or light alloy, on which is applied a protective film 4, which is based on plastic or based on acrylic resin, for example.

The coupling of the metallic lamina 3 to the wooden structure 2 supporting the door or window frame occurs, in addition to by way of adhesive 5, also by way of mechanical anchoring; the aluminum lamina 3 is shaped continuously onto the wooden profiled element 2 by way of an adapted apparatus and then "hooked" to the surface concerned along the entire length of the wooden profiled element 2.

In this manner, the aluminum core 3 will always be kept integral with the wooden profiled element 2.

The application of the protective film 4 gives a guarantee of adhesion over time, in that the film 4 is applied on the aluminum surface 3 which is conveniently suitably treated in order to prevent oxidation over time.

The film is not applied directly to the wooden structure 2.

The protective film 4 is applied to the aluminum core by way of a layer of polyurethane adhesive or the like 6, and between the aluminum core 3 and the wooden supporting structure 2 is another layer of polyurethane adhesive 5, as mentioned previously.

This makes it possible to create further intermediate insulating layers and prevent the creation of condensation phenomena deriving from conductivity.

Substantially, the invention provides door and window frames of wood mixed with other materials directly in a single profile in bars that are already made up, and not with the coupling of two or more parts. This makes it possible to reduce costs and be competitive, by providing door and window frames of wood mixed with other materials with technical characteristics (resistance to UV rays, salinity, etc.) and aesthetic characteristics such as the color of wood.

Furthermore, when particular protective films based on acrylic resin are used, anti-dirt and anti-graffiti characteristics can also be offered.

The production process can provide the aluminum core 3 and the protective lamina 4 prepared previously, gluing the protective lamina 4 onto the aluminum core 3, and then subsequently gluing and shaping the coupled composite thus obtained onto wooden profiled members in bars or a supporting structure 2.

According to the invention, the aluminum or in general metallic lamina 3 is applied to the wooden supporting structure 2 after the interposition of a lamina of PVC or other material 7 which is in turn glued by way of a layer of adhesive 8 onto the wooden supporting structure 2.

The metallic lamina 3 is then glued, by way of a layer of adhesive 5, to the lamina of PVC or other material 7.

The supporting structure 2 can also be covered internally using a sequence of layers similar to that used for the outer surface of the product, i.e. on the surface that is in contact with the atmospheric agents.

In practice it has been found that the door or window frame according to the present invention fully achieves the set aim and objects.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A door or window frame (1) with high resistance atmospheric agents, comprising a wooden supporting structure (2), and at least one metallic lamina (3) applied to said wooden supporting structure (2) at least at one of its two faces, said metallic lamina (3) being in turn covered with a protective film (4), said metallic lamina (3) being glued to said wooden supporting structure (2);
said metallic lamina (3) being shaped continuously onto said wooden profiled element (2) and hooked to the surface concerned along the entire length of the wooden supporting structure (2) to grip said wooden supporting structure (2) so as to be coupled to said wooden structure (2) also by way of mechanical anchoring; said protective film (4) being a film of plastic material or based on acrylic resin, and said protective film (4) being glued to the surface of said metallic lamina (3);
**characterized by** the fact of comprising a lamina (7) of PVC or other material interposed between the metallic lamina (3) and the wooden supporting structure (2), said lamina (7) being glued by way of a layer of adhesive (8, 5) to the wooden supporting structure (2) and to the metallic lamina (3).

2. The door or window frame according to claim 1, **characterized in that** the adhesive used to bond said metallic lamina (3) to said lamina (7) of PVC or other material is a polyurethane adhesive (5).

## Patentansprüche

1. Tür- oder Fensterrahmen (1) mit hoher Beständigkeit gegenüber Witterungseinflüssen, umfassend eine hölzerne Tragstruktur (2) und mindestens eine Metallbeschichtung (3), die an der hölzernen Tragstruktur (2) mindestens an dessen zwei Seitenflächen angebracht ist, wobei die Metallbeschichtung (3) wiederum mit einer Schutzfolie (4) bedeckt ist, wobei die Metallbeschichtung (3) an der hölzernen Tragstruktur (2) verleimt ist,
wobei die Metallbeschichtung (3) kontinuierlich auf das hölzerne Profilelement (2) geformt ist und an der betreffenden Oberfläche entlang der gesamten Länge der hölzernen Tragstruktur (2) mit Haken befestigt ist, um die hölzerne Tragstruktur (2) zu greifen, sodass sie mit der hölzernen Tragstruktur (2) auch mittels einer mechanischen Verankerung gekuppelt ist, wobei es sich bei der Schutzfolie (4) um eine Schutzfolie aus Kunststoffmaterial oder basierend auf einem Akrylharz handelt, und wobei die Schutzfolie (4) an der Oberfläche der Metallbeschichtung (3) verleimt ist,
**dadurch gekennzeichnet, dass** er eine Beschichtung (7) aus PVC oder einem anderen Werkstoff umfasst, der zwischen der Metallbeschichtung (3) und der hölzernen Tragstruktur (2) eingesetzt ist, wobei diese Beschichtung (7) mittels einer Schicht von Klebstoff (8, 5) an der hölzernen Tragstruktur (2) und der Metallbeschichtung (3) verleimt ist.

2. Tür- oder Fensterrahmen nach Anspruch 1, **dadurch gekennzeichnet, dass** der Klebstoff, der genutzt wird, um die Metallbeschichtung (3) mit der Beschichtung (7) aus PVC oder einem anderen Werkstoff zu verbinden, ein Polyurethanklebstoff (5) ist.

## Revendications

1. Cadre de porte ou de fenêtre (1) à haute résistance aux agents atmosphériques, comprenant une structure de support en bois (2) et au moins une lame métallique (3) appliquée sur ladite structure de support en bois (2) au moins sur l'une de ses deux faces, ladite lame métallique (3) étant, à son tour, recouverte d'un film protecteur (4), ladite lame métallique (3) étant collée à ladite structure de support en bois (2) ;
ladite lame métallique (3) étant façonnée en continu sur ledit élément profilé en bois (2) et accrochée à la surface concernée sur toute la longueur de la structure de support en bois (2) pour adhérer à ladite structure de support en bois (2) de sorte à se coupler à ladite structure en bois (2) également par voie d'ancrage mécanique ; ledit film protecteur (4) étant un film en matière plastique ou à base de résine acrylique, et ledit film protecteur (4) étant collé à la surface de ladite lame métallique (3) ;
**caractérisé en ce qu'**il comprend une lame (7) en PVC ou autre matière interposée entre la lame métallique (3) et la structure de support en bois (2), ladite lame (7) étant collée par voie d'une couche adhésive (8,5) à la structure de support en bois (2) et à la lame métallique (3) .

2. Cadre de porte ou de fenêtre selon la revendication 1, **caractérisé en ce que** l'adhésif utilisé pour unir ladite lame métallique (3) à ladite lame (7) en PVC ou autre matière est un adhésif polyuréthane (5).
